# EUROPEAN PATENT APPLICATION

(11) **EP 4 393 565 A1**
(43) Date of publication of application: **03.07.2024**
(21) Application number: 22383325.2
(22) Date of filing: 30.12.2022
(51) Int. Cl.: B01D 53/00, F25J 1/00, F25J 3/02, F25J 5/00, B01D 53/26

(54) **PLANT TO OBTAIN LIQUID METHANE BY POLISHING A GAS MIXTURE AND METHOD**

(71) Applicant: CRYO INOX, S.L., 08213 Polinyà (ES)
(72) Inventor: CALLEJÓN AGRAMUNT, Ismael, 08181 SENTMENAT (ES); FORNS FARRÚS, Sergi, 08320 EL MASNOU (ES); MONTAÑA FAIGET, Àngels, 43000 ASCÓ (ES); CALLEJÓN ÁLVAREZ, Júlia, 08181 SENTMENAT (ES); CALLEJÓN ÁLVAREZ, Carles, 08181 SENTMENAT (ES)
(74) Representative: ZBM Patents - Zea, Barlocci & Markvardsen

(57) **Abstract**

In one aspect, a plant to obtain liquid methane by polishing a gas mixture is provided. The gas mixture comprises a portion of CO₂ and at least 96% mol CH₄. The plant comprises a cryogenic unit, a polishing unit, and a storage unit.
in a further aspect, a method of obtaining liquid methane by polishing a gas mixture is provided.

## Description

The present disclosure relates to plants and methods for obtaining liquid methane by polishing a gas mixture.

### BACKGROUND

Biomethane refers to a mixture of different gases produced by biogas upgrading facilities or plants.

Biomethane comprises a portion of methane CH₄ (96% mol -99.5% mol of the biomethane), a portion of carbon dioxide CO₂ (4% mol - 0.5% mol of the biomethane), and lesser portions of other compounds (e.g., water H₂O, hydrogen sulfide H₂S). The lesser portions of other compounds may be considered as contaminants of the biomethane. For example, a high amount of H₂S within the biomethane may rise corrosion issues within the plant (e.g., with the pipes, or with a metal element in contact with the biomethane).

Liquefaction of biomethane involves cooling the methane to a temperature to which the CH₄ is in liquid phase. However, at these temperatures, the CO₂ comprised within the biomethane (up to 4% mol of CO₂ within the biomethane) is at least in part in solid phase. Consequently, if the biomethane is liquefied and stored, the stored liquid biomethane will comprise a high amount of carbon dioxide in solid phase which may damage the plant, hinder the transport of liquefied biomethane or even prevent the posterior use of the liquid biomethane.

Therefore, it is required to decrease the amount of CO₂ within the biomethane prior to the liquefaction of the biomethane.

Similarly, it is required to decrease the amount of CO₂ within a gas mixture comprising a portion of CO₂ and at least 96% mol CH₄, prior to the liquefaction of the gas mixture. The aforementioned gas mixture may be e.g., biomethane or natural gas depending on its origin (i.e., respectively a renewable source or a fossil source).

Currently, to decrease the amount of CO₂ within the gas mixture prior to the liquefaction of the gas mixture, pressure-swing adsorption (PSA) systems or temperature-swing adsorption (TSA) systems may be used. However, PSA systems or TSA systems involve selectively adsorbing CO₂ and / or adsorbing contaminants of gas mixture onto adsorbent particles, and allowing a polished gas mixture to pass through the PSA systems or TSA systems.

Upon operation of the PSA systems or TSA systems, the adsorbent particles may become saturated with the contaminants and may lose ability to adsorb beyond a maximum amount. Before more contaminants may be removed from the gas mixture, the adsorbent particles must be regenerated. This normally involves exposing the saturated particles to high temperatures, and to gas streams that have low concentrations of CO₂ or low concentrations of the contaminants to promote desorption of CO₂ or desorption of the contaminants from the adsorbent particles.

For example, PSA systems may require a supply of a clean gas (i.e., with low concentrations of CO₂ or low concentrations of the contaminants). In PSA systems, 10 to 15% of the gas mixture stream may be used to regenerate the PSA systems. Consequently, PSA systems may involve a high CH₄ spillage. CH₄ slippage should be avoided because CH₄ is a greenhouse gas with a high global warming potential, up to 30 times higher than carbon dioxide's global warming potential. Furthermore, CH₄ slippage is an amount of CH₄ gas that is lost and that will not be available to provide e.g., energy. As a result, PSA systems may be very expensive and energy intensive for recovering CH₄ from gas mixture.

In summary, CO₂ should be at least partially removed from the gas mixture. Removal of the portion of CO₂ from the gas mixture raises the gas mixture's CH₄ content, resulting in a gas that is polished. Furthermore, CO₂ must be removed to less than 50 ppm from the gas mixture to allow the liquefaction of the gas mixture comprising less than 50 ppm of CO₂.

Currently, CO₂ is typically separated in a gaseous phase from the gas mixture (to be polished). Therefore, subsequent liquefaction of CH₄ is needed for the storage or transport of the CH₄ which increases the energy cost of these plants.

In summary, obtaining liquid CH₄ currently involves separation and / or recovery of e.g., CH₄, or CO₂ from the gas mixture which is energy intensive and an expensive process operation. Plants may comprise both separation systems for gas (i.e., biomethane, or natural gas) polishing and systems for liquefaction of CH₄ because the CH₄ is separated from the gas mixture in gaseous state, and these plants may therefore have an increased plant footprint.

Examples of the present disclosure seek to at least partially reduce one or more of the aforementioned problems.

### SUMMARY

In one aspect, a plant to obtain liquid methane by polishing a gas mixture is provided. The gas mixture comprises a portion of CO₂, and at least 96% mol CH₄. The plant comprises a cryogenic unit, a polishing unit, and a storage unit. The cryogenic unit comprises an inlet to receive the gas mixture to be polished with a pressure comprised between 30 barg and 50 barg; and an outlet to exit the gas mixture to a first predetermined temperature comprised between - 105°C and - 90°C to which the cryogenic unit is configured to cool the gas mixture to be polished. The polishing unit comprises a heat exchanger with an inlet and an outlet, the inlet of the heat exchanger in fluid communication with the outlet of the cryogenic unit. Furthermore, the heat exchanger is configured: to cool the cooled gas mixture to a second predetermined temperature comprised between - 160°C and - 145°C, and to separate at least part of the CO₂ in solid phase from the cooled gas mixture; and to exit a CH₄ rich stream comprising liquid CH₄, through a CH₄ exit line. The storage unit comprises an inlet and an outlet. The inlet of the storage unit is in fluid communication with the outlet of the polishing unit. The storage unit receives the CH₄ rich stream comprising liquid CH₄ and stores the liquid CH₄.

This configuration of the plant allows to efficiently obtain and store liquid CH₄ (i.e., liquid gas mixture which is polished). In this configuration, the cryogenic unit cools the gas mixture to the first predetermined temperature whereby the cooled gas mixture comprises a portion of CH₄ in liquid phase and a portion of CO₂ in liquid phase or in gaseous phase. The polishing unit further cools the gas mixture that is cooled by the cryogenic unit, to the second predetermined temperature. The cooled gas mixture that is further cooled by the operation of the polishing unit, comprises the portion of CH₄ in liquid phase and the portion of CO₂ in solid phase. Therefore, it is possible to trap solidified CO₂ within the heat exchanger of the polishing unit. As a result, the CH₄ rich stream comprising liquid CH₄, may be exited from the polishing unit through the CH₄ exit line.

Consequently, it is possible to operate the plant to polish the gas mixture with no additional phase change (e.g., from gaseous phase to liquid phase) of the CH₄ during gas polishing (e.g., removal of CO₂ from the gas mixture to be polished) and liquefaction of the CH₄ because the CH₄ may be directly obtained in liquid phase and because of the different solidification temperature between the CO₂ and the CH₄ for an operating pressure (as will be explained later on). Therefore, the plant may comprise fewer parts and allows to implement simpler systems while directly obtaining liquid CH₄ (which is polished).

It may be noted that the third CH₄ rich stream comprising liquid CH₄, may be exited from the polishing unit through the third CH₄ exit line, and directly supplied to a CH₄ unit to operate the CH₄ in liquid phase (e.g., the grid).

In some examples, the CH₄ rich stream may comprise a final portion of liquid CH₄, and a final portion of CO₂ wherein the final portion of CO₂ is less than or equal to 50 ppm of CO₂. The CO₂ may be in gaseous phase or in liquid phase.

For example, it is possible to achieve polishing of the gas mixture with suitable ranges of temperature and pressure. In some examples, the first predetermined temperature to which the cryogenic unit is configured to cool the gas mixture to be polished, may be about - 100°C. In this example, the first predetermined temperature may not deviate from - 100°C by more than 1 °C. In some examples, the second predetermined temperature to which the polishing unit is configured to further cool the cooled gas mixture to be polished, may be about - 150°C. In this example, the second predetermined temperature may not deviate from - 150°C by more than 1 °C

In some of these examples, a pressure to which the cryogenic unit is configured to receive the gas mixture to be polished, may be comprised between 36 barg and 39 barg.

In some examples, the plant may comprise a dehydration unit coupled to the cryogenic unit, the dehydration unit configured to remove moisture from the gas mixture to be polished so that the gas mixture to be polished comprises 1 ppm of H₂O or less than 1 ppm of H₂O. In some of these examples, the gas mixture to be polished may be received by the dehydration unit with a pressure comprised between 0.2 barg and 15 barg.

In some of these examples, the dehydration unit may comprise one or more adsorbers configured to reduce an H₂O content of the gas mixture to be polished, to a final H₂O content which is less than or equal to 1 ppm of H₂O. The one or more adsorbers (e.g., zeolite or alumina-based adsorbents) may be loaded with adsorbents capable of reversibly adsorbing the H₂O of the gas mixture. The one or more adsorbers may be selected to achieve that the gas mixture to be polished comprises 1 ppm of H₂O or less than 1 ppm of H₂O.

In some of these examples, the dehydration unit may comprise an inlet and an outlet. The inlet of the dehydration unit may be configured to receive the gas mixture to be polished; and the outlet of the dehydration unit may be fluidically connected to the inlet of the cryogenic unit so that the gas mixture to be polished that is fed to the inlet of the cryogenic unit comprises 1 ppm of H₂O or less than 1 ppm of H₂O. Therefore, a reduced amount of water may enter the cryogenic unit. Consequently, a reduced amount of solidified water, which can damage any element of the plant, may go through the units. As a result, wear may thus be reduced, and shutdown of the plant for maintenance may be avoided.

In some of these examples, the polishing unit may be configured to receive the cooled gas mixture (by the cryogenic unit) with a pressure comprised between 30 barg and 50 barg, for example between 36 barg and 39 barg.

The configuration of operating pressure to which the polishing unit is configured to receive the cooled gas mixture and the operating temperature to which the polishing unit is configured to further cool the cooled gas mixture, may be selected to achieve selective separation of CO₂ from CH₄ because of different solidification temperature between the CO₂ and the CH₄ for the operating pressure. Surprisingly, at these operating temperatures (e.g., - 105°C < t < - 90°C) and at the operating pressures (e.g., 36 barg < p < 39 barg), the energy cost of the separation of CO₂ from the liquid CH₄ of the gas mixture to be polished may be decreased.

Consequently, a CH₄ rich stream comprising a final portion of liquid CH₄, and a final portion of liquid CO₂ wherein the final portion of the liquid CO₂ is less than or equal to 50 ppm of CO₂, may be obtained. Therefore, separation of CO₂ from the gas mixture to be polished and retrieval of liquefied CH₄ may be achieved in a single unit (i.e., the polishing unit). As a result, subsequent storage or subsequent transport of the liquid CH₄ may be achieved with a reduced energy cost. In addition, the plant may have a reduced plant footprint (i.e., the space needed for implementing the space is reduced).

In some examples, the polishing unit may exit a CO₂ rich stream comprising a portion of the CO₂ in liquid phase or gaseous phase and a portion of CH₄, through a CO₂ exit line.

Referring to the storage unit, the storage unit may comprise a pressure-reducing device in fluid communication with the polishing unit through the CH₄ exit line, and a tank in fluid communication with the pressure-reducing device. The pressure-reducing device may be configured to expand the CH₄ rich stream to a pressure comprised between 1 barg and 5 barg. In these examples, the pressure-reducing device may be e.g., a Joule Thomson valve. In some of these examples, when the CH₄ rich stream may be expanded to the pressure comprised between 1 barg and 5 barg, the liquid CH₄ may be subcooled (e.g., subcooled by more than 3 °C with respect to the equilibrium temperature for the pressure of the storage unit). Therefore, the liquid gas mixture that is polished (i.e., the liquid CH₄ with up to 50 ppm of CO₂) may readily be transported for its use.

In a further aspect, a method of obtaining liquid methane by polishing a gas mixture is provided. The gas mixture comprises a portion of CO₂, at least 96% mol CH₄, and 1 ppm of H₂O or less than 1 ppm of H₂O. The method comprises obtaining the gas mixture to be polished; feeding the gas mixture to be polished to a cryogenic unit and cooling to a first predetermined temperature the gas mixture to be polished, the first predetermined temperature comprised between - 105°C and - 90°C. The method further comprises feeding the cooled gas mixture to a polishing unit to cool the cooled gas mixture to a second predetermined temperature comprised between - 160°C and - 145°C; and simultaneously liquefying and polishing the gas mixture by separating at least part of the CO₂ in solid phase from the gas mixture cooled to the second predetermined temperature; recovering a CH₄ rich stream comprising liquid CH₄, through a CH₄ exit line.

According to this aspect, a method of obtaining liquid methane is provided in which the liquid CH₄ exiting the polishing unit further cools the gas mixture that is cooled by the cryogenic unit, to the second predetermined temperature. The cooled gas mixture that is further cooled by the operation of the polishing unit, may comprise a portion of CH₄ in liquid phase and a portion of CO₂ in solid phase. Therefore, it is possible to trap solidified CO₂ within the heat exchanger of the polishing unit. Consequently, liquefying and polishing of the gas mixture may be achieved simultaneously by separating at least part of the CO₂ in solid phase from the gas mixture cooled to the second predetermined temperature. As a result, the plant is less energy intensive and may have a smaller footprint because the plant may not include a polishing system (e.g., PSA system) and a liquefaction system for CH₄.

In some examples, the method may comprise feeding the CH₄ rich stream comprising liquid CH₄ to a storage unit through the CH₄ exit line and storing the liquid CH₄.

In some examples, a pressure to which the gas mixture is obtained, may be comprised between 30 barg and 50 barg, for example between 36 barg and 39 barg.

In some examples, the first predetermined temperature to which the cryogenic unit is configured to cool the gas mixture to be polished may be - 100°C.

In some examples, the second predetermined temperature to which the polishing unit is configured to further cool the cooled gas mixture to be polished may be - 150°C.

In some examples, the method may comprise reducing the pressure of the CH₄ rich stream comprising liquid CH₄ to a pressure comprised between 1 barg and 5 barg, and
subcooling at least 3°C the liquid CH₄.

In some examples, the method may further comprise heating the polishing unit and melting the CO₂ in solid phase so that the heated CO₂ is in liquid phase or gaseous phase. In some of these examples, the method further comprises exiting a CO₂ rich stream comprising a portion of the CO₂ in liquid phase or gaseous phase and a portion of CH₄, through a CO₂ exit line. In these examples, the CO₂ rich stream may comprise at least 99% mol CH₄ and up to 1% mol CH₄. Consequently, a plant with reduced spilling or loss of the portion of CH₄ during gas polishing, or during separation and liquefaction of the CH₄, may be obtained. As a result, the carbon print of a plant may be improved over the carbon print of a plant with e.g., PSA systems.

The term gas mixture may be understood as any gas comprising a portion of CO₂, and at least 96% mol CH₄. For example, the gas mixture composition may vary accordingly if the gas mixture is biomethane, or natural gas.

The term gas polishing may refer to any process which is capable of removing CO₂ and / or impurities from the gas mixture which comprises at least 96% mol CH₄, and a portion of CO₂. The gas mixture may be e.g., biomethane or natural gas (comprising at least 96% mol CH₄, and a portion of CO₂) depending on its origin (i.e., respectively a renewable source or a fossil source).

The term barg may be understood as the unit for the measurement of the pressure given by absolute pressure minus atmospheric pressure.

The term "% mol" may be used to refer to a molar percentage of a number of moles of a first component (e.g., CH₄) present in a mixture relative to the total number of moles comprised in the mixture.

The term "subcooling" may be used to refer to a liquid at a temperature below the boiling point of the liquid for a given pressure.

### BRIEF DESCRIPTION OF THE DRAWINGS

Non-limiting examples of the present disclosure will be described in the following, with reference to the appended drawings in which:
Figure 1 is a simplified view of a plant to obtain liquid methane by polishing a gas mixture according to an example of the present disclosure;
Figure 2 schematically represents a plant to obtain liquid methane by polishing a gas mixture according to an example of the present disclosure;
Figure 3 schematically represents a plant to obtain liquid methane by polishing a gas mixture according to an example of the present disclosure;
Figure 4 schematically represents a plant to obtain liquid methane by polishing a gas mixture according to an example of the present disclosure;
Figure 5 schematically represents a plant to obtain liquid methane by polishing a gas mixture according to an example of the present disclosure; and
Figure 6 schematically shows a block diagram of a method of obtaining liquid methane by polishing a gas mixture according to an example of the present disclosure.

### DETAILED DESCRIPTION OF EXAMPLES

In these figures, the same reference signs have been used to designate matching elements.

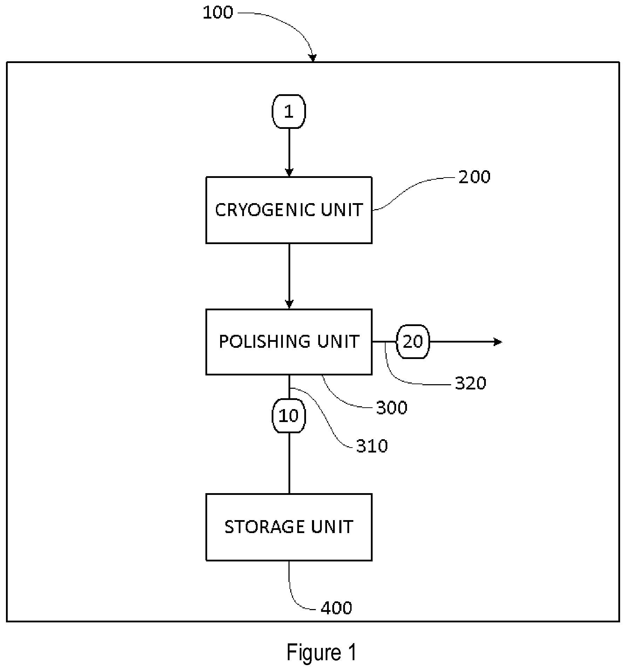

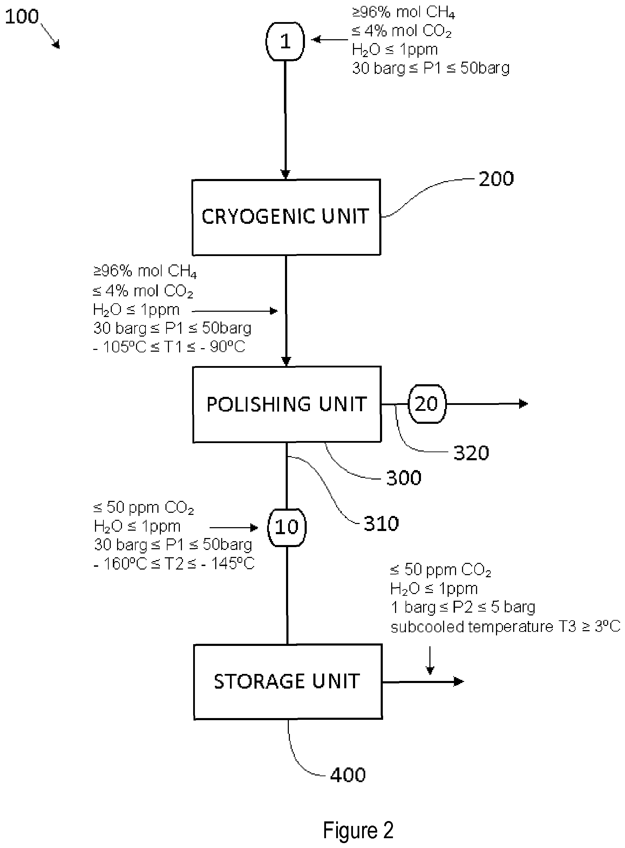

Features of figure 1 may be described in combination with the features of any of the examples shown in figures 2-5.

Figure 1 is a simplified view of one example of a plant 100 to obtain liquid methane by polishing a gas mixture 1. The plant 100 comprises a cryogenic unit 200, a polishing unit 300 coupled to the cryogenic unit 200, and a storage unit 400.

The cryogenic unit 200 is configured to receive the gas mixture 1 to be polished; and cool the gas mixture 1 to a first predetermined temperature. The cryogenic unit 200 is based on a Rankine cycle which allows adjusting thermal requirements for cooling and / or heating a gas mixture 1 to be polished.

The cryogenic unit 200 may comprise an inlet to receive the gas mixture 1 to be polished and an outlet to exit the gas mixture to a first predetermined temperature to which the cryogenic unit is configured to cool the gas mixture to be polished.

Cryogenic units are based on refrigeration cycles. The refrigerant of these refrigeration cycles may be part of the gas stream to be cooled (open cycle process) or a separate refrigerant continuously recirculated through a heat exchanger or a cold box (closed cycle process).

In the example of figure 1, the cryogenic unit 200 is based on a closed Rankine cycle. The closed Rankine cycle may use a mixed refrigerant (e.g., a mixture of compounds such as hydrocarbons). The composition of the mixed refrigerant may be selected to match the boiling curve of each compound forming the mixed refrigerant with a cooling curve of the gas mixture 1 to be polished or with a cooling curve of any received gas stream. Therefore, the mixed refrigerant may provide a cooling duty across a range of temperatures comprised between - 160°C and 25°C. Particularly, the refrigerant mixture may comprise compounds which are at least partially in liquid phase across the temperature range mentioned above. As a result, the refrigerant mixture may provide latent heat to cool the gas mixture 1 to be polished or to cool the received stream.

In some examples, the cryogenic unit 200 may cool the gas mixture 1 to be polished by the action of a counter current flow refrigerant cycle (i.e., the mixed refrigerant flows in an opposite direction to the flow of gas being cooled) during operation of the cryogenic unit 200).

It may be noted that depending on the temperature of the gas mixture 1 to be polished or the temperature of the received stream, the cryogenic unit 200 may cool the gas mixture 1 to be polished or the received stream across the temperature range mentioned above. Similarly, the cryogenic unit 200 may heat the gas mixture 1 to be polished or the received stream across the temperature range mentioned above.

In some examples, the first predetermined temperature to which the gas mixture 1 to be polished is cooled by the cryogenic unit may be comprised between - 105°C and - 90°C, for example - 100°C. Therefore, a gas mixture 1 to be polished may be cooled from ambient temperature to a temperature comprised between - 105°C and - 90°C.
As a result, the cryogenic unit 200 cools the gas mixture to the first predetermined temperature whereby the cooled gas mixture may comprise a portion of CH₄ in liquid phase and a portion of CO₂. The portion of CO₂ may be in liquid phase or in gaseous phase.

In some of these examples, the gas mixture 1 to be polished, which is received by the cryogenic unit 200, may be at a pressure comprised between 30 barg and 50 barg, for example between 36 barg and 39 barg. At these operating temperatures (e.g., - 105°C < t < - 90°C) and at these operating pressures (e.g., 36 barg < p < 39 barg), the energy cost of liquefaction of CH₄, and the energy cost of separation of CO₂ from liquid CH₄ comprised within the cooled gas mixture 1 may be decreased.

Referring to the polishing unit 300, the polishing unit 300 comprises a heat exchanger with an inlet and an outlet. The inlet of the heat exchanger is in fluid communication with the outlet of the cryogenic unit 200. Furthermore, the heat exchanger is configured: to further cool the cooled gas mixture to a second predetermined temperature comprised between - 160°C and - 145°C. Therefore, at the second predetermined temperature, the polishing unit 300 may separate at least part of the CO₂ in solid phase from the cooled gas mixture. Consequently, it is possible to obtain a CH₄ rich stream which may comprise a final portion of liquid CH₄, and a final portion of CO₂ wherein the final portion of the CO₂ is less than or equal to 50 ppm of CO₂ (as will be later explain on). As a result, a liquid gas mixture (which is polished) may be obtained. In figure 1, the CH₄ rich stream 10 exits the polishing unit 300 through the CH₄ exit line 310.

Similarly, in the example of figure 1, the polishing unit 300 exits a CO₂ rich stream 20 comprising a portion of the CO₂ in liquid phase or gaseous phase, and a portion of CH₄. In figure 1, the CO₂ rich stream 20 exits the polishing unit 300 through the CO₂ exit line 320.

Referring to the operating pressures and at these operating temperatures of the polishing unit (commented above), the portion of CH₄ may be mainly in liquid phase whereas the portion of CO₂ may be mainly in solid phase. Therefore, there may be an overlap between liquefaction of CH₄ and separation of CO₂ from the gas mixture 1 within the polishing unit 300. The heat exchanger may retain the portion of CO₂ in solid phase (which solidifies through and / or within the heat exchanger), and a stream comprising substantially liquid CH₄ with less than 50 ppm of CO₂ may be obtained at the outlet of the polishing unit 300. Consequently, gas polishing and retrieval of the portion of CO₂ may be achieved in a single unit (i.e., the polishing unit 300).

As a result, storage or transport of the liquid CH₄ may be achieved with a reduced energy cost. In addition, the plant 100 may have a reduced plant footprint (i.e., the space needed for implementing the space is reduced).

In some examples (like the example of figure 1), upon operation, the heat exchanger may be saturated of CO₂ in solid phase. Therefore, desaturation of the heat exchanger may be achieved by heating the CO₂ in solid phase with the mixed refrigerant of the cryogenic unit 200. Consequently, the CO₂ may be in liquid phase or gaseous phase after heating. Then the CO₂ rich stream 20 comprising the CO₂ in liquid phase or gaseous phase may be exited from the polishing unit 300 through a CO₂ exit line 320. In these examples, the CO₂ rich stream may comprise at least 99% mol CH₄ and up to 1% mol CH₄. Consequently, a plant with reduced spilling or loss of the portion of CH₄ during gas polishing, or during separation and liquefaction of the CH₄, may be obtained.

Referring to the storage unit 400, the storage unit 400 may comprise a pressure-reducing device in fluid communication with the outlet of the heat exchanger through the CH₄ exit line 310, and a tank in fluid communication with the pressure-reducing device. The pressure-reducing device may be configured to expand the CH₄ rich stream 10 to a pressure comprised between 1 barg and 5 barg. In these examples, the pressure-reducing device may be e.g., a Joule Thomson valve.

Due to the storage unit 400 being in fluid communication with the outlet of the polishing unit 300, the storage unit 400 receives the CH₄ rich stream 10 comprising the liquid CH₄ with up to 50 ppm of CO₂ and stores the liquid CH₄.

In some examples, when the CH₄ rich stream 10 may be expanded to the pressure comprised between 1 barg and 5 barg, the liquid CH₄ may be subcooled to at least 3 °C (i.e., subcooled by more than 3 °C). Therefore, the liquid gas mixture that is polished (i.e., the liquid CH₄ with up to 50 ppm of CO₂) may readily be transported for its use.

Furthermore, in some examples, the plant 100 may comprise a desulphurization unit coupled to the cryogenic unit 200. The desulphurization unit may be configured to receive the gas mixture 1 to be polished with a pressure comprised between 0.2 barg and 15 barg, for example between 10 barg and 15 barg; and remove H₂S from the gas mixture 1 to be polished so that the gas mixture 1 to be polished may comprise 4 ppm of H₂S or less than 4 ppm of H₂S. Therefore, the gas mixture 1 to be polished may be at least partially desulphurized by the action of the desulphurization unit. As a result, the received gas mixture 1 by the cryogenic unit 200 may comprise up to 4 ppm of H₂S.

In some of these examples, the desulphurization unit may comprise a NaOH scrubbing column and an active carbon filter. The NaOH scrubbing column may be configured to reduce an H₂S content of the gas mixture 1 to be polished to a resulting H₂S content which is less than or equal to 100 ppm of H₂S. The active carbon filter may be coupled to the NaOH scrubbing column and the active carbon filter may be configured to reduce the resulting H₂S content of the gas mixture to be polished to a final H₂S content which is less than or equal to 4 ppm of H₂S. Therefore, a gas mixture 1 that is a mixture of gases with an initial content of H₂S may comprise a final H₂S content of up to 4 ppm of H₂S by the action of the NaOH scrubbing column and the active carbon filter.

In these examples, the desulphurization unit may comprise an inlet and an outlet. The inlet of the desulphurization unit may be configured to receive the gas mixture 1 to be polished; and the outlet of the desulphurization unit may be fluidically connected to the inlet of the cryogenic unit 200 and the gas mixture to be polished comprising 4 ppm of H₂S or less than 4 ppm of H₂S may be fed to the cryogenic unit 200. As a result, the received gas mixture 1 by the cryogenic unit 200 may comprise up to 4 ppm of H₂S.

In some examples, the plant 100 may comprise a dehydration unit coupled to the cryogenic unit 200. The dehydration unit may be configured to receive the gas mixture 1 to be polished with a pressure comprised between 0.2 barg and 15 barg, for example between 10 barg and 15 barg; and remove moisture from the gas mixture 1 to be polished so that the gas mixture 1 to be polished may comprise 1 ppm of H₂O or less than 1 ppm of H₂O. Therefore, the gas mixture 1 to be polished may be at least partially dehydrated by the action of the dehydration unit. As a result, the received gas mixture 1 by the cryogenic unit 200 may comprise up to 1 ppm of H₂O.

In some of these examples, the dehydration unit may comprise one or more adsorbers configured to reduce an H₂O content of the gas mixture 1 to be polished to a final H₂O content which is less than or equal to 1 ppm of H₂O. The one or more adsorbers are configured to remove moisture from the gas mixture 1 to be polished. In some of these examples, the one or more adsorbers may be selected to achieve that the gas mixture 1 to be polished may comprise 1 ppm of H₂O or less than 1 ppm of H₂O. As a result, the received gas mixture 1 by the cryogenic unit 200 may comprise up to 1 ppm of H₂O.

In these examples, the dehydration unit may comprise an inlet and an outlet. The inlet of the dehydration unit may be configured to receive the gas mixture 1 to be polished; and the outlet of the dehydration unit may be fluidically connected to the inlet of the cryogenic unit so that the gas mixture 1 to be polished comprising 1 ppm of H₂O or less than 1 ppm of H₂O may be fed to the inlet of the cryogenic unit 200.

It may be noted that the cryogenic unit 200 may receive the gas mixture 1 to be polished or depending on the composition of the received gas mixture 1 to be polished, the plant 100 may comprise a desulphurization unit and / or a dehydration unit for removing H₂S or H₂O from the gas mixture 1 to be polished. In the latter case (i.e., when the plant 100 may comprise a desulphurization unit and / or a dehydration unit), the received gas mixture 1 to be polished may be at least partially desulphurized and / or at least partially dehydrated by respectively the action of the desulphurization unit and / or the dehydration unit before being supplied to the cryogenic unit 200.

Therefore, in some examples, the plant 100 may comprise a cleaning unit coupled to the cryogenic unit 200. The cleaning unit may comprise the above-mentioned desulphurization unit and the above-mentioned dehydration unit. Therefore, the gas mixture 1 to be polished may be at least partially desulphurized and at least partially dehydrated by respectively the action of the desulphurization unit and the dehydration unit. As a result, the received gas mixture 1 by the cryogenic unit may comprise up to 4 ppm of H₂S and up to 1 ppm of H₂O. In these examples, the desulphurization unit and I or the dehydration unit may comprise the respective features of any example of desulphurization unit and / or the features of any example of the dehydration unit herein disclosed.

In some of these examples, the cleaning unit may comprise an inlet and an outlet. The inlet of the cleaning unit may be configured to receive the gas mixture 1 to be polished; and the outlet of the cleaning unit may be fluidically connected to the inlet of the cryogenic unit 200. Therefore, the gas mixture 1 to be polished may comprise 4 ppm of H₂S or less than 4 ppm of H₂S, and 1 ppm of H₂O or less than 1 ppm of H₂O. As a result, a gas mixture 1 with up to 4 ppm of H₂S and up to 1 ppm of H₂O may be fed to the cryogenic unit 200.

Similarly, it may be noted that the cryogenic unit 200 may receive a gas mixture 1 to be polished at a pressure. Depending on the pressure of the received gas mixture 1 to be polished, the plant 100 may comprise one or more compression units to increase the pressure of the received gas mixture 1 to be polished before the received gas mixture 1 to be polished may be supplied to the cryogenic unit.

In some examples, the plant 100 may comprise a first compression unit coupled to the cryogenic unit 200. The first compression unit may be configured to compress the gas mixture 1 to be polished at a first compression pressure. The first compression pressure may be comprised between 0.2 barg and 15 barg, for example between 10 barg and 15 barg. In these examples, the gas mixture 1 to be polished may be compressed by the first compression unit before the gas mixture 1 to be polished may be supplied to the desulphurization unit and / or to the dehydration unit.

In some of these examples, the plant 100 may comprise a second compression unit coupled to the cryogenic unit. The second compression unit may be configured to compress the gas mixture to be polished at a second compression pressure. Particularly, the second compression pressure may be greater than the first compression pressure and the second compression pressure may be comprised between 30 barg and 50 barg, for example between 36 barg and 39 barg, and more for example at 36 barg.

It may be noted that the cryogenic unit is configured to receive the gas mixture to be polished where the gas mixture to be polished may be at a pressure comprised between 30 barg and 50 barg, for example between 36 barg and 39 barg.

By compressing the gas mixture 1 to be polished, separation of CO₂ from the gas mixture 1 to be polished may be facilitated. Therefore, the overall electric work required by the polishing unit 300 to simultaneously liquefy and polish the gas mixture 1 may be reduced. As a result, compressing the gas mixture 1 to be polished before the gas mixture 1 is fed to the cryogenic unit 200 and / or to the polishing unit 300, may reduce the overall electric work required to obtain liquid CH₄ with up to 50 ppm of CO₂ from the gas mixture 1.

Figure 2 schematically represents a plant 100 to obtain liquid methane by polishing a gas mixture 1. Features of figure 2 may be described in combination with the features of any of the examples shown in figure 1.

In figure 2, the gas mixture 1 to be polished may comprise 96% mol - 99.5% mol CH₄, 4% mol - 0.5% mol CO₂, and the H₂O content within the gas mixture 1 is equal to or less than 1 ppm. In the example of figure 2, the gas mixture 1 to be polished may be at a pressure P1 comprised between 30 barg and 50 barg, for example between 36 barg and 39 barg. Therefore, the gas mixture 1 to be polished may be supplied to the cryogenic unit 200 at the pressure comprised e.g., between 30 barg and 50 barg.

By the passage of the gas mixture 1 to be polished within the cryogenic unit 200, the gas mixture 1 to be polished may be cooled to the first predetermined temperature T1 comprised between - 105°C and - 90°C, for example - 100°C.

Therefore, the temperature to which the gas mixture 1 to be polished is exited from the cryogenic unit 200, may be comprised between - 105°C and - 90°C. Furthermore, the cooled gas mixture 1 to be polished may comprise the same above-mentioned composition (i.e., 96% mol - 99.5% mol CH₄, 4% mol - 0.5% mol CO₂, and the H₂O content of the gas mixture 1 that is equal to or less than 1 ppm).

In figure 2, the cooled gas mixture 1 to be polished is supplied to the polishing unit 300 to separate at least part of the CO₂ in solid phase from the cooled gas mixture 1. In this example of figure 2, the cooled gas mixture 1 to be polished, received by the polishing unit 300 may comprise a temperature between - 105°C and - 90°C, and a pressure comprised between 36 barg and 39 barg.

The polishing unit 300 further cools with the heat exchanger the gas mixture that is cooled by the cryogenic unit 200, to the second predetermined temperature. The heat exchanger may be configured: to cool the cooled gas mixture to the second predetermined temperature comprised between - 160°C and - 145°C. The cooled gas mixture that is further cooled by the operation of the polishing unit 300, comprises the portion of CH₄ in liquid phase and the portion of CO₂ in solid phase.

Therefore, in this example, the polishing unit 300 may comprise an operating temperature between - 160°C and - 145°C, and an operating pressure comprised between 36 barg and 39 barg. At these operating pressures and at these operating temperatures, the portion of CH₄ of the gas mixture 1 to be polished may be mainly in liquid phase whereas the portion of CO₂ may be mainly in solid phase. As a result, gas polishing and retrieval of liquid CH₄ may be achieved in a single unit (i.e., the polishing unit).

The polishing unit 300 provides a CH₄ rich stream 10 which is exited from the polishing unit 300 through the CH₄ exit line 310. By the passage of the gas mixture 1 to be polished within the polishing unit 300, the CH₄ rich stream 10 may comprise a final portion of liquid CH₄, and a final portion of liquid CO₂ wherein the final portion of the liquid CO₂ is less than or equal to 50 ppm of CO₂.

Furthermore, the polishing unit 300 may exit a CO₂ rich stream 20 comprising a portion of the CO₂ in liquid phase or gaseous phase and a portion of CH₄, through a CO₂ exit line. 320. The CO₂ rich stream 20 may be further supplied to any system requiring a CO₂ rich stream with at least 99% mol CH₄ and up to 1% mol CH₄.

Referring to the storage unit 400, the storage unit 400 may comprise a pressure-reducing device in fluid communication with the polishing unit 300 through the CH₄ exit line 310, and a tank in fluid communication with the pressure-reducing device. The pressure-reducing device may be configured to expand the CH₄ rich stream 10 being fed to the storage unit 400 at a pressure P2 comprised between 1 barg and 5 barg, or for example 3 barg. In these examples, the pressure-reducing device may be e.g., a Joule Thomson valve.

In some of these examples, when the CH₄ rich stream 10 may be expanded to the pressure comprised between 1 barg and 5 barg, or for example 3 barg, the liquid CH₄ may be subcooled to least at 3 °C.

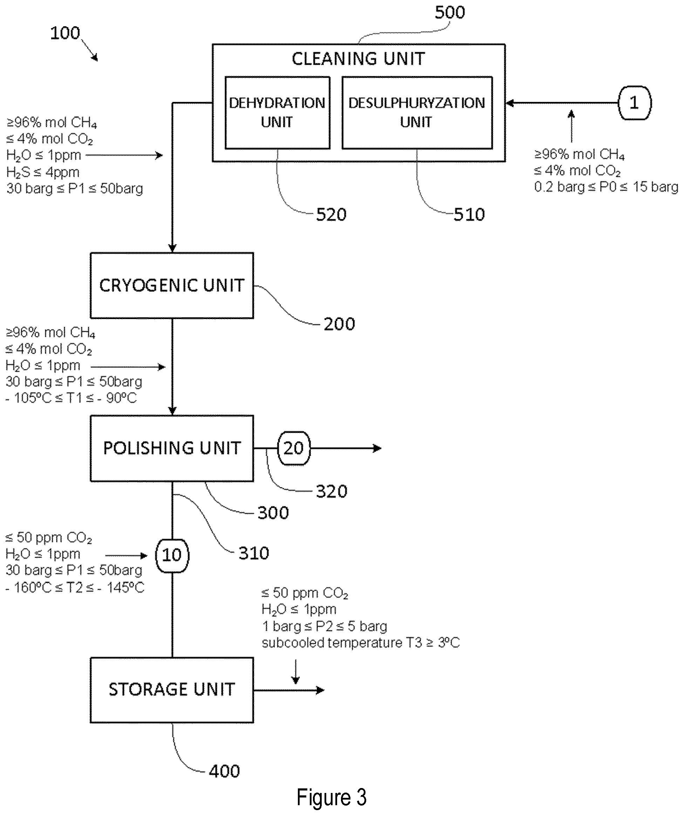

Figure 3 schematically represents a plant 100 to obtain liquid methane by polishing a gas mixture 1. Features of figure 3 may be described in combination with the features of any of the examples shown in figures 1 or 2.

Compared to figure 2, the plant 100 represented in figure 3 further comprises a cleaning unit 500. The cleaning unit 500 comprises a desulphurization unit 510 and a dehydration unit 520. The desulphurization unit 510 and the dehydration unit 520 may comprise the features of any example of desulphurization unit and / or the features of any example of the dehydration unit herein disclosed (e.g., referring to the description and examples related to figure 1).

The desulphurization unit 510 may be configured to receive the gas mixture 1 to be polished with a pressure comprised between 0.2 barg and 15 barg, for example between 10 barg and 15 barg; and remove H₂S from the gas mixture 1 to be polished so that the gas mixture 1 to be polished may comprise 4 ppm of H₂S or less than 4 ppm of H₂S.

The dehydration unit 520 may be configured to receive the gas mixture 1 to be polished with a pressure comprised between 0.2 barg and 15 barg, for example between 10 barg and 15 barg; and remove moisture from the gas mixture 1 to be polished so that the gas mixture 1 to be polished may comprise 1 ppm of H₂O or less than 1 ppm of H₂O.

Therefore, the gas mixture 1 to be polished, which exits the cleaning unit 500, may comprise 4 ppm of H₂S or less than 4 ppm of H₂S, and 1 ppm of H₂O or less than 1 ppm of H₂O.

It may be noted that according to the examples disclosed herein, the desulphurization unit 510 may comprise a NaOH scrubbing column and an active carbon filter as aforementioned in examples referring to figure 1.

Similarly, the dehydration unit 520 may comprise one or more adsorbers as aforementioned in examples referring to figure 1.

In figure 3, the cleaning unit 500 is coupled to the cryogenic unit. The cleaning unit 500 may comprise an inlet and an outlet, the inlet of the cleaning unit 500 may be configured to receive the gas mixture 1 to be polished; and the outlet of the cleaning unit may be fluidically connected to the first inlet of the cryogenic unit 200.

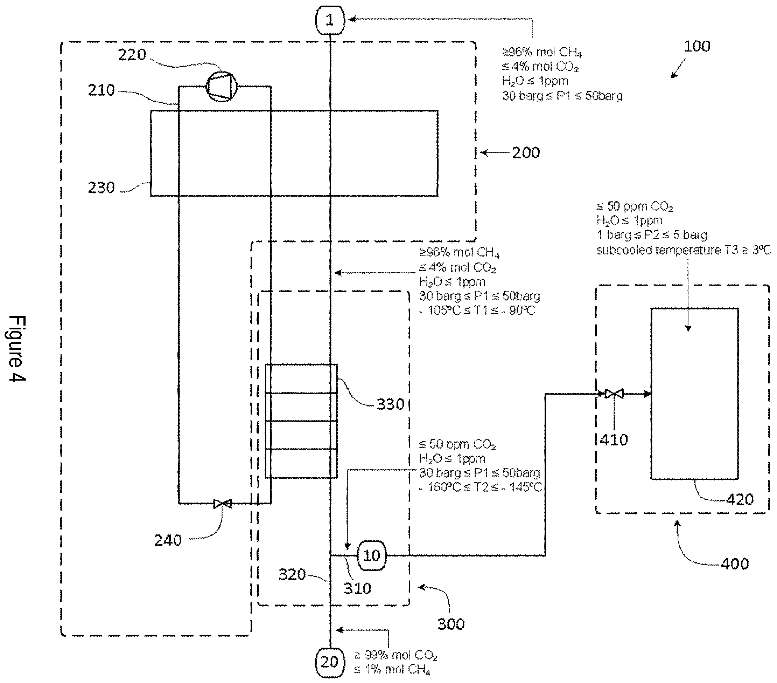

Figure 4 schematically represents a plant 100 to obtain liquid methane by polishing a gas mixture 1. Features of figure 4 may be described in combination with the features of any of the examples shown in figures 1 to 3.

In figure 4, the gas mixture 1 to be polished may comprise 96% mol - 99.5% mol CH₄, 4% mol - 0.5% mol CO₂, and the H₂O content of the gas mixture 1 that is equal to or less than 1 ppm. In the example of figure 4, the gas mixture 1 to be polished may be at a pressure P1 comprised between 30 barg and 50 barg, for example between 36 barg and 39 barg. Therefore, the gas mixture 1 to be polished may be supplied to the cryogenic unit 200 at the pressure comprised e.g., between 36 barg and 39 barg.

In figure 4, the cryogenic unit 200 comprises a mixed refrigerant circuit 210, a refrigerant compressor 220, a cold box 230, and a pressure-reducing device 240 such as a Joule Thomson valve. A mixed refrigerant within the mixed refrigerant circuit 210 may be compressed by the refrigerant compressor 220. The mixed refrigerant may be at least partially condensed before entering the cold box 230 and substantially fully condensed within the cold box 230. The substantially fully condensed mixed refrigerant may be flashed through the pressure-reducing device 240 (e.g., a joule Thomson valve). Therefore, a flash evaporation of the mixed refrigerant may be achieved which may result in at least a partial evaporation of the mixed refrigerant. The at least partial evaporation of the mixed refrigerant may provide a cooling duty across a range of temperatures comprised between - 160°C and 25°C. As a result, the refrigerant mixture may provide latent heat to cool the gas mixture 1 to be polished or the received stream.

It may be noted that depending on the ambient temperature, in some examples, the plant may comprise a pre-cooling unit. The pre-cooling unit may comprise a chiller. The pre-cooling unit may be configured to cool down the gas mixture 1 to be polished before being supplied to the cryogenic unit 200. Furthermore, the pre-cooling unit may be further configured to cool down the mixed refrigerant of the cryogenic unit 200 before entering the cold box 230. The pre-cooling unit may be in use when the ambient temperature to which the gas mixture 1 to be polished or to which the mixed refrigerant may be, is greater thana predetermined inlet temperature of the cold box 230 (e.g., t > 15°C). When the ambient temperature is higher than the predetermined inlet temperature of the cold box 230, the pre-cooling unit may cool the gas mixture 1 to be polished or the mixed refrigerant from ambient temperature to a temperature that is lower than the predetermined inlet temperature of the cold box 230.

By the passage of the gas mixture 1 to be polished within the cryogenic unit 200, the gas mixture 1 to be polished may be cooled to a temperature T1 comprised between - 105°C and - 90°C, for example - 100°C.

Therefore, the gas mixture 1 to be polished that is exited from the cryogenic unit 200 may comprise a temperature between - 105°C and - 90°C, and may comprise the same above-mentioned composition (i.e., 96% mol - 99.5% mol CH₄, 4% mol - 0.5% mol CO₂, and the H₂O content of the gas mixture 1 that is equal to or less than 1 ppm).

In figure 4, the cooled gas mixture 1 to be polished is supplied to the polishing unit 300 to at least partially separate CO₂ from the cooled gas mixture 1 to be polished. In this example of figure 4, the received cooled gas mixture 1 to be polished by the polishing unit 300 may comprise a temperature between - 105°C and - 90°C, and a pressure comprised between 30 barg and 50 barg.

In some examples, the received cooled gas mixture 1 to be polished by the polishing unit 300 may comprise a temperature - 100°C, and a pressure comprised between 36 barg and 39 barg.

In the example of figure 4, the polishing unit 300 comprises a heat exchanger 330.The heat exchanger 330 comprises an inlet and an outlet. The inlet of the heat exchanger 330 is in fluid communication with the outlet of the cryogenic unit 200. The heat exchanger 330 may be configured to receive the cooled gas mixture 1 with: the temperature comprised between - 105°C and - 90°C; and the pressure comprised between 30 barg and 50 barg.

The heat exchanger 330 may be configured: to cool the cooled gas mixture 1 to a second predetermined temperature comprised between - 160°C and - 145°C. Therefore,

In some examples, a filter may be placed downstream the heat exchanger 330. The filter may be in fluid communication with the outlet of the heat exchanger, and with the inlet of the storage unit 400. The filter may be configured to trap remaining CO₂ in solid phase (through the passage of the gas mixture 1 through the heat exchanger 330, the portion of CO₂ is mainly in solid phase) and to prevent CO₂ in solid phase entering the storage unit 400, As a result, a reduced solidified amount of CO₂ may be supplied to the storage unit 400.

In some examples, the polishing unit 300 may comprise a pressure-reducing device (e.g., a joule Thomson valve) and a phase separator. In this example, an inlet of the joule Thomson valve is in fluid communication with the outlet of the cryogenic unit and an outlet of the pressure-reducing device may be in fluid communication with an inlet of the phase separator. Furthermore, an outlet of the phase separator may be in fluid communication with the inlet of the heat exchanger 330,

The pressure-reducing device may decrease the pressure of the received cooled gas mixture 1 to a pressure comprised between 12 barg and 16 barg. Consequently, the cooled gas mixture 1 may be further cooled to a temperature comprised between - 120°C and -115°C to which the portion of CO₂ of the cooled gas mixture 1 may be in solid phase. The expansion of the cooled gas mixture 1 by the Joule-Thomson process, further decrease the temperature of the cooled gas mixture 1 to the above commented temperature range (i.e., - 120°C < t < - 145°C). Therefore, the phase separator may receive a stream comprising the portion of CH₄ in liquid phase and the portion of CO₂ in solid phase. The phase separator may be a device to separate a mixture into the constituent phases of the mixture. Therefore, the phase separator may separate the CO₂ in solid phase from the CH₄ in liquid phase. Consequently, the amount of CO₂ to be trapped in solid phase within the heat exchanger 330 may be decreased. Therefore, a batch cycle time corresponding to the elapsed time under which e.g., the heat exchanger 330 may be operated to separate at least part of the CO₂ in solid phase from the cooled gas mixture 1 may be increased. As a result, the heat exchanger 330 may saturate at a lower rate than a saturation rate of a heat exchanger which is not in fluid connection with a pressure-reducing device and with a phase separator.

In some of these examples, about 60% of the CO₂ in solid phase may be further trapped within the above commented filter

In figure 4, the storage unit 400 comprises a pressure-reducing device 410 in fluid communication with the outlet of the heat exchanger 330 through the CH₄ exit line 310, and a tank 420 in fluid communication with the pressure-reducing device 410. The pressure-reducing device 410 may be configured to expand the CH₄ rich stream 10 to a pressure comprised between 1 barg and 5 barg. In these examples, the pressure-reducing device 410 may be e.g., a Joule Thomson valve.

Due to the storage unit 400 being in fluid communication with the outlet of the polishing unit 300, the storage unit 400 receives the CH₄ rich stream 10 comprising the liquid CH₄ with up to 50 ppm of CO₂ and stores the liquid CH₄.

In some examples, when the CH₄ rich stream 10 may be expanded to the pressure comprised between 1 barg and 5 barg, the liquid CH₄ may be subcooled to at least 3 °C. Therefore, the liquid gas mixture that is polished (i.e., the liquid CH₄ with up to 50 ppm of CO₂) may readily be transported for its use.

Therefore, the tank 420 may be configured to store the liquid CH₄ with up to 50 ppm of CO₂ at a subcooled temperature T3 of at least 3°C and at a pressure comprised between 1 barg and 5 barg, for example 3 barg.

Referring to the heat exchanger 330, upon operation, the heat exchanger 330 may be saturated of CO₂ in solid phase. Therefore, desaturation of the heat exchanger 330 may be achieved by heating (e.g., to ambient temperature) the CO₂ in solid phase with the mixed refrigerant of the cryogenic unit 200 through the mixed refrigerant circuit 210. Consequently, the CO₂ in solid phase may be melted. As a result, the CO₂ may be in liquid phase or gaseous phase after heating. Therefore, a stream comprising the CO₂ in liquid phase or gaseous phase may be exited from the polishing unit. This stream is the CO₂ rich stream 20 which is exited from the polishing unit 300 through the CO₂ exit line 320.

In the example of figure 4, the CO₂ rich stream 20 may comprise at least 99% mol CH₄ and up to 1% mol CH₄. Consequently, a plant with reduced spilling or loss of the portion of CH₄ during gas polishing, or during separation and liquefaction of the CH₄, may be obtained.

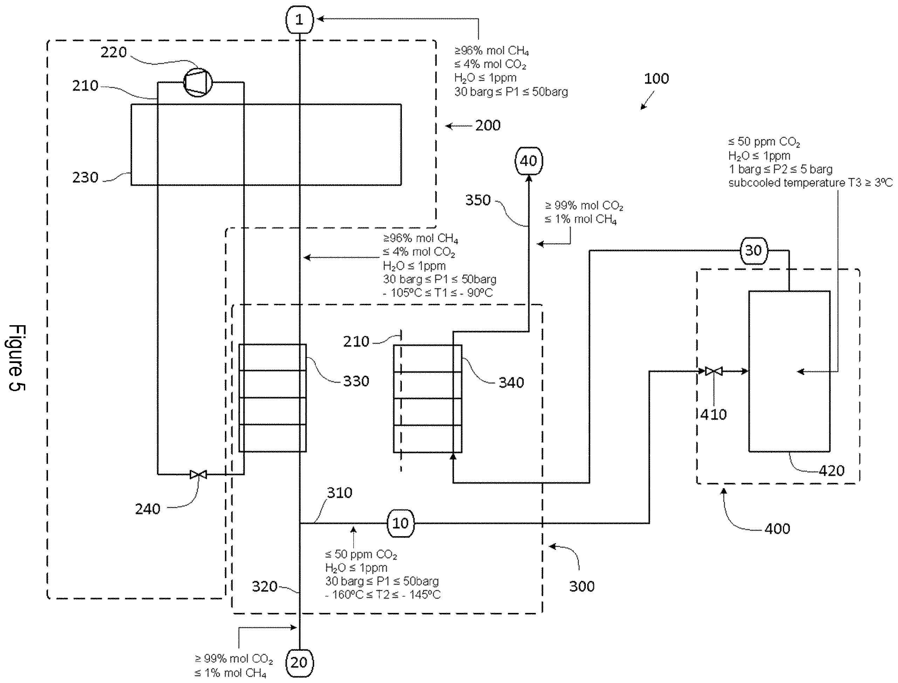

Figure 5 schematically represents a plant 100 to obtain liquid methane by polishing a gas mixture 1. Features of figure 5 may be described in combination with the features of any of the examples shown in figures 1 to 4.

In figure 5, an example of a plant 100 with a continuous gas polishing operation, is shown.

In this example of figure 5, the heat exchanger 330 is under operation (i.e., in operation mode) to separate at least part of the CO₂ in solid phase from the cooled gas mixture (as mentioned in the description referring to figures 1 to 4).

In this example of figure 5, compared to figure 4, the plant 100 represented in figure 5 differs because there is a second heat exchanger 340 which is shown in regeneration mode (as indicated by the dot line).

It may be noted that when a heat exchanger is saturated with CO₂ in solid phase, the heat exchanger may not achieve separation of CO₂ from the cooled gas mixture. Therefore, the heat exchanger may be placed in regeneration mode.

In regeneration mode, the second heat exchanger 340 may be heated with the mixed refrigerant through the mixed refrigerant circuit 210. Therefore, desaturation may be achieved by heating the CO₂ in solid phase thanks to the mixed refrigerant of the cryogenic unit 200. The CO₂ in solid phase may be heated by the passage of the mixed refrigerant through the second heat exchanger 340. The mixed refrigerant may be at a temperature which enables heating the CO₂ in solid phase and melting the CO₂ in solid phase. As a result, the CO₂ may be in liquid phase or gaseous phase after heating. Therefore, a stream comprising the CO₂ in liquid phase or gaseous phase may be exited from the polishing unit 300. This stream is the second CO₂ rich stream 40 which is exited from the polishing unit 300 through the second CO₂ exit line 350.

Similarly to the CO₂ rich stream 20, the second CO₂ rich stream 40 may be further supplied to any system intaking a CO₂ rich stream with at least 99% mol CH₄ and up to 1% mol CH₄.

After desaturation of the second heat exchanger 340, the second heat exchanger 340 may be placed in operation mode and the heat exchanger 330 may be placed in regeneration mode. In the example of figure 5, the heat exchanger 330 and the second heat exchanger 340 may operate alternatively. While the heat exchanger 330 is in use (i.e., in operation mode) to separate CO₂ in solid phase from the gas mixture 1, the second heat exchanger 340 is being regenerated (i.e., in regeneration mode). When the heat exchanger 330 is saturated of CO₂ in solid phase, the second heat exchanger 340 may be used to continue polishing the gas mixture 1 and the heat exchanger may be regenerated. Consequently, continuous (i.e., uninterrupted) operation of the polishing unit 300 may be achieved.

Furthermore, the heat exchanger 330 and the second heat exchanger 340 may operate alternatively depending on a batch cycle time corresponding to the elapsed time under which e.g., the first heat exchanger 330 may be operated to separate (i.e., in operation mode) at least part of the CO₂ in solid phase from the cooled gas mixture 1 while the second heat exchanger 340 may be in regeneration mode.

In some examples, as shown in figure 5, the second heat exchanger 340 (in regeneration mode) may be supplied with a storage stream 30. The storage stream 30 proceeds from the storage unit 400.

The storage unit 400 may store the liquid CH₄ with up to 50 ppm of CO₂ at a subcooled temperature T3 of at least 3°C (i.e., subcooled by more than 3 °C with respect to the equilibrium temperature for the pressure of the storage unit). Within the storage unit 400, at least a part of the liquid CH₄ may be in a vapor phase. Consequently, the storage stream 30 may comprise the portion of CH₄ in vapor phase. As mentioned above, the storage unit 400 may store the liquid CH₄ at a subcooled temperature T3 of at least 3°C. Therefore, the storage stream 30 may be at the subcooled temperature T3 of at least 3°C.

Thus, the second heat exchanger 340 may be flushed and cooled by the passage of the storage stream 30. As a result, the storage stream 30 may allow residual CO₂ trapped within the second heat exchanger 340 to be removed from the second heat exchanger 340. As a result, the second CO₂ rich stream 40 may be exited from the polishing unit 300 through a second CO₂ exit line 350.

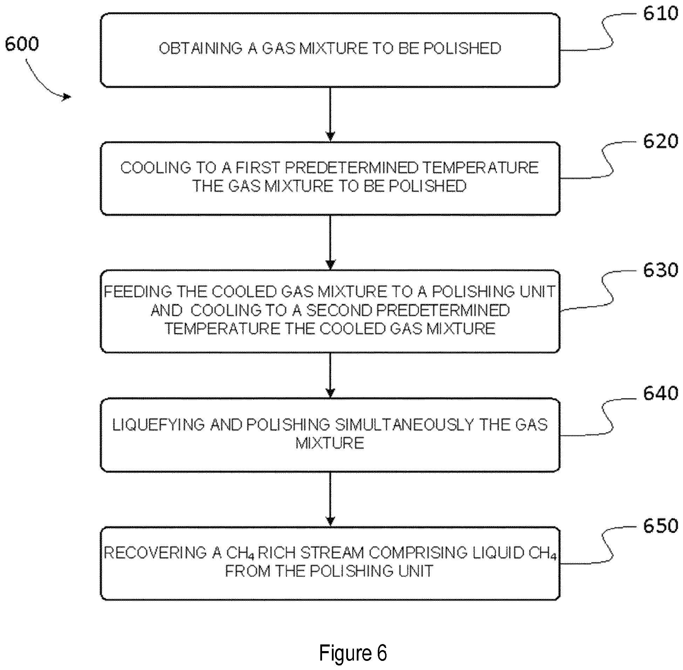

Figure 6 schematically shows a block diagram of a method 600 of obtaining liquid methane by polishing a gas mixture 1 according to an example of the present disclosure. Features of figure 6 may be described in combination with the features of any of the examples shown in figures 1 to 5.

At block 610, the block 610 may comprise obtaining a gas mixture 1 to be polished, the gas mixture 1 to be polished comprising a portion of CO₂, at least 96% mol CH₄, and 1 ppm of H₂O or less than 1 ppm of H₂O.

At block 620, the block 620 may comprise feeding the gas mixture 1 to be polished to a cryogenic unit 200 and cooling the gas mixture 1 to a first predetermined temperature comprised between - 105°C and - 90°C.

At block 630, the block 630 may comprise feeding the cooled gas mixture 1 to a polishing unit to cool the cooled gas mixture to a second predetermined temperature comprised between - 160°C and - 145°C.

At block 640, the block 640 may comprise simultaneously liquefying and polishing the gas mixture 1 by separating at least part of the CO₂ in solid phase from the gas mixture 1 cooled to the second predetermined temperature.

At block 650, the block 650 may comprise recovering a CH₄ rich stream 10 comprising liquid CH₄, through a CH₄ exit line 310.

In some examples, the method 600 may comprise feeding the CH₄ rich stream 10 comprising liquid CH₄ to a storage unit 400 through the CH₄ exit line 310 and storing the liquid CH₄.

In some examples, the block 610 may further comprise obtaining the gas mixture 1 to be polished at a pressure comprised between 30 barg and 50 barg, for example between 36 barg and 39 barg.

In some examples, the first predetermined temperature to which the cryogenic unit 200 is configured to cool the gas mixture 1 to be polished may be - 100°C (as aforementioned in the description referring to figures 1 to 5).

In some examples, the second predetermined temperature to which the polishing unit 300 is configured to further cool the gas mixture 1 to be polished may be - 150°C (as aforementioned in the description referring to figures 1 to 5).

In some examples, the method 600 may comprise reducing the pressure of the CH₄ rich stream 10 comprising liquid CH₄ to a pressure comprised between 1 barg and 5 barg, and subcooling at least 3°C the liquid CH₄ by using a pressure-reducing device (as aforementioned in the description referring to figures 1 to 5).

In some examples, the method 600 may comprise heating the polishing unit 300 and melting the CO₂ in solid phase so that the heated CO₂ is in liquid phase or gaseous phase. In some of these examples, the method further may comprise exiting a CO₂ rich stream 20 comprising a portion of the CO₂ in liquid phase or gaseous phase and a portion of CH₄, through a CO₂ exit line 320. In these examples, the CO₂ rich stream 20 may comprise at least 99% mol CH₄ and up to 1% mol CH₄. Consequently, a plant with reduced spilling or loss of the portion of CH₄ during gas polishing, or during separation and liquefaction of the CH₄, may be obtained.

In some examples, the method 600 may comprise operating alternatively the heat exchanger 330 and the second heat exchanger 340 depending on a batch cycle time.

In some of these examples, the heat exchanger 330 and the second heat exchanger 340 are alternatively configured: to separate at least part of the CO₂ in solid phase from the gas mixture 1, or to receive heat by the passage of the mixed refrigerant whereby the received heat melts the CO₂ in solid phase, and exiting the CO₂ rich stream 20 through the CO₂ exit line 320 or exiting the second CO₂ rich stream 40 through the CO₂ exit line.

For reasons of completeness, various aspects of the present disclosure are set out in the following numbered clauses:
1. A plant to obtain liquid methane by polishing a gas mixture comprising a portion of CO₂ and at least 96% mol CH₄, the plant comprising:
   a cryogenic unit comprising an inlet to receive the gas mixture to be polished with a pressure comprised between 30 barg and 50 barg; and an outlet to exit the gas mixture to a first predetermined temperature comprised between - 105°C and - 90°C to which the cryogenic unit is configured to cool the gas mixture to be polished;
   a polishing unit comprising a heat exchanger with an inlet and an outlet, the inlet of the heat exchanger in fluid communication with the outlet of the cryogenic unit, the heat exchanger configured:
      ▪ to cool the cooled gas mixture to a second predetermined temperature comprised between - 160°C and - 145°C, and
      ▪ to separate at least part of the CO₂ in solid phase from the cooled gas mixture, and
      ▪ to exit a CH₄ rich stream comprising liquid CH₄, through a CH₄ exit line; and
   a storage unit comprising an inlet and an outlet, the inlet of the storage unit in fluid communication with the outlet of the polishing unit, the storage unit to receive the CH₄ rich stream comprising liquid CH₄ and to store the liquid CH₄.
2. The plant according to clause 1, the plant comprising a desulphurization unit coupled to the cryogenic unit, the desulphurization unit configured to:
   receive the gas mixture to be polished with a pressure comprised between 0.2 barg and 15 barg; and
   remove H₂S from the gas mixture to be polished so that the gas mixture to be polished comprises 4 ppm of H₂S or less than 4 ppm of H₂S.
3. The plant according to clause 2, wherein the desulphurization unit comprises:
   a NaOH scrubbing column configured to reduce an H₂S content of the gas mixture to be polished to a resulting H₂S content which is less than or equal to 100 ppm of H₂S; and
   an active carbon filter coupled to the NaOH scrubbing column, the active carbon filter configured to reduce the resulting H₂S content of the gas mixture to be polished to a final H₂S content which is less than or equal to 4 ppm of H₂S.
4. The plant according to clauses 2 or 3,
   wherein the desulphurization unit comprises an inlet and an outlet, the inlet of the desulphurization unit is configured to receive the gas mixture to be polished; and the outlet of the desulphurization unit is fluidically connected to the inlet of the cryogenic unit so that the gas mixture to be polished that is fed to the inlet of the cryogenic unit comprises 4 ppm of H₂S or less than 4 ppm of H₂S.
5. The plant according to any of clauses 1 to 3, the plant comprising a dehydration unit coupled to the cryogenic unit, the dehydration unit configured to:
   receive the gas mixture to be polished with a pressure comprised between 0.2 barg and 15 barg; and
   remove moisture from the gas mixture to be polished so that the gas mixture to be polished comprises 1 ppm of H₂O or less than 1 ppm of H₂O.
6. The plant according to clause 5, wherein the dehydration unit comprises:
   one or more adsorbers configured to reduce an H₂O content of the gas mixture to be polished, to a final H₂O content which is less than or equal to 1 ppm of H₂O.
7. The plant according to clause 6, wherein the one or more adsorbers are selected to achieve that the gas mixture to be polished comprises 1 ppm of H₂O or less than 1 ppm of H₂O.
8. The plant according to any of clauses 5 to 7,
   wherein the dehydration unit comprises an inlet and an outlet, the inlet of the dehydration unit is configured to receive the gas mixture to be polished; and the outlet of the dehydration unit is fluidically connected to the inlet of the cryogenic unit so that the gas mixture to be polished that is fed to the inlet of the cryogenic unit comprises 1 ppm of H₂O or less than 1 ppm of H₂O.
9. The plant according to clause 1, the plant comprising a cleaning unit coupled to the cryogenic unit, the cleaning unit comprising:
   a desulphurization unit, the desulphurization unit configured to:
      receive the gas mixture to be polished with a pressure comprised between 0.2 barg and 15 barg; and remove H₂S from the gas mixture to be polished so that the gas mixture to be polished comprises 4 ppm of H₂S or less than 4 ppm of H₂S; and
   a dehydration unit coupled to the desulphurization unit; the dehydration unit configured to:
      receive the gas mixture to be polished with a pressure comprised between 0.2 barg and 15 barg; and remove moisture from the gas mixture to be polished so that the gas mixture to be polished comprises 1 ppm of H₂O or less than 1 ppm of H₂O.
10. The plant according to clause 9, wherein the desulphurization unit comprises:
   a NaOH scrubbing column configured to reduce an H₂S content of the gas mixture to be polished to a resulting H₂S content which is less than or equal to 100 ppm of H₂S; and
   an active carbon filter coupled to the NaOH scrubbing column, the active carbon filter configured to reduce the resulting H₂S content of the gas mixture to be polished to a final H₂S content which is less than or equal to 4 ppm of H₂S.
11. The plant according to clause 9 or 10, wherein the dehydration unit comprises:
   one or more adsorbers configured to reduce an H₂O content of the gas mixture to be polished to a final H₂O content which is less than or equal to 1 ppm of H₂O.
12. The plant according to any of clauses 9 to 11,
   wherein the cleaning unit comprises an inlet and an outlet, the inlet of the cleaning unit is configured to receive the gas mixture to be polished; and the outlet of the cleaning unit is fluidically connected to the inlet of the cryogenic unit.
13. The plant according to any of clauses 1 to 12, the plant comprising a first compression unit coupled to the cryogenic unit, the first compression unit configured to compress the gas mixture to be polished at a first compression pressure.
14. The plant according to clause 13, wherein the first compression pressure is comprised between 0.2 barg and 15 barg.
15. The plant according to clause 13, wherein the first compression pressure is comprised between 10 barg and 15 barg.
16. The plant according to clause any of clauses 1 to 15, the plant comprising a second compression unit coupled to the cryogenic unit, the second compression unit configured to compress the gas mixture to be polished at a second compression pressure.
17. The plant according to clause 16, wherein the second compression pressure is greater than the first compression pressure.
18. The plant according to clauses 16 or 17, wherein the second compression pressure is comprised between 30 barg and 50 barg.
19. The plant according to clauses 16 or 17, wherein the second compression pressure is comprised between 36 barg and 39 barg.
20. The plant according to any of clauses 1 to 19, wherein the storage unit comprises a pressure-reducing device configured to expand the liquid CH₄ being fed to the storage unit at a pressure comprised between 1 barg and 5 barg.
21. A method of obtaining liquid methane by polishing a gas mixture comprising a portion of CO₂, at least 96% mol CH₄, and 1 ppm of H₂O or less than 1 ppm of H₂O, the method comprising:
   obtaining the gas mixture to be polished;
   feeding the gas mixture to be polished to a cryogenic unit and cooling the gas mixture to a first predetermined temperature comprised between - 105°C and - 90°C;
   feeding the cooled gas mixture to a polishing unit to cool the cooled gas mixture to a second predetermined temperature comprised between - 160°C and - 145°C;
   simultaneously liquefying and polishing the gas mixture by separating at least part of the CO₂ in solid phase from the gas mixture cooled to the second predetermined temperature; and
   recovering a CH₄ rich stream comprising liquid CH₄, through a CH₄ exit line.
22. The method according to clause 21, the method comprising:
   feeding the CH₄ rich stream comprising liquid CH₄ to a storage unit through the CH₄ exit line and storing the liquid CH₄.
23. The method according to clauses 21 or 22, wherein a pressure to which the gas mixture is obtained, is comprised between 30 barg and 50 barg.
24. The method according to clauses 21 or 22, wherein a pressure to which the gas mixture is obtained, is comprised between 36 barg and 39 barg.
25. The method according to any of clauses 21 to 24, wherein the first predetermined temperature to which the cryogenic unit is configured to cool the gas mixture to be polished may be - 100°C.
26. The method according to any of clauses 21 to 24, wherein the second predetermined temperature is - 150°C.
27. The method according to any of clauses 23 to 26, the method comprising:
   reducing the pressure of the CH₄ rich stream comprising liquid CH₄ to a pressure comprised between 1 barg and 5 barg, and
   subcooling at least 3°C the liquid CH₄.
28. The method according to any of clauses 21 to 27, wherein the recovered CH₄ rich stream comprises a final portion of liquid CH₄, and a final portion of liquid CO₂ wherein the final portion of the liquid CO₂ is less than or equal to 50 ppm of CO₂.
29. The method according to any of clauses 21 to 28, the method comprising:
   heating the polishing unit and melting the CO₂ in solid phase so that the heated CO₂ is in liquid phase or gaseous phase.
30. The method according to clause 29, the method comprising:
   exiting a CO₂ rich stream comprising a portion of the CO₂ in liquid phase or gaseous phase and a portion of CH₄, through a CO₂ exit line.
31. The method according to any of clauses 21 to 30, the method comprising:
   operating alternatively a first heat exchanger and a second heat exchanger depending on a batch cycle time.
32. The method according to clauses 29 and 31,
   wherein the first heat exchanger and the second heat exchanger are alternatively configured:
   ▪ to separate at least part of the CO₂ in solid phase from the gas mixture, or
   ▪ to receive heat by the passage of the mixed refrigerant whereby the received heat melts the CO₂ in solid phase, and exiting the CO₂ rich stream through the CO₂ exit line.

Although only a number of examples have been disclosed herein, other alternatives, modifications, uses and/or equivalents thereof are possible. Furthermore, all possible combinations of the described examples are also covered.

Thus, the scope of the present disclosure should not be limited by particular examples, but should be determined only by a fair reading of the claims that follow. If reference signs related to drawings are placed in parentheses in a claim, they are solely for attempting to increase the intelligibility of the claim, and shall not be construed as limiting the scope of the claim.

## Claims

1. A plant to obtain liquid methane by polishing a gas mixture comprising a portion of CO₂ and at least 96% mol CH₄, the plant comprising:
a cryogenic unit comprising an inlet to receive the gas mixture to be polished with a pressure comprised between 30 barg and 50 barg; and an outlet to exit the gas mixture to a first predetermined temperature comprised between - 105°C and - 90°C to which the cryogenic unit is configured to cool the gas mixture to be polished;
a polishing unit comprising a heat exchanger with an inlet and an outlet, the inlet of the heat exchanger in fluid communication with the outlet of the cryogenic unit, the heat exchanger configured:
▪ to cool the cooled gas mixture to a second predetermined temperature comprised between - 160°C and - 145°C, and
▪ to separate at least part of the CO₂ in solid phase from the cooled gas mixture, and
▪ to exit a CH₄ rich stream comprising liquid CH₄, through a CH₄ exit line; and
a storage unit comprising an inlet and an outlet, the inlet of the storage unit in fluid communication with the outlet of the polishing unit, the storage unit to receive the CH₄ rich stream comprising liquid CH₄ and to store the liquid CH₄.

2. The plant according to claim 1, the plant comprising a dehydration unit coupled to the cryogenic unit, the dehydration unit configured to: remove moisture from the gas mixture to be polished so that the gas mixture to be polished comprises 1 ppm of H₂O or less than 1 ppm of H₂O.

3. The plant according to claims 1 or 2, wherein the dehydration unit comprises:
one or more adsorbers configured to reduce an H₂O content of the gas mixture to be polished, to a final H₂O content which is less than or equal to 1 ppm of H₂O.

4. The plant according to claim 3, wherein the one or more adsorbers are selected to achieve that the gas mixture to be polished comprises 1 ppm of H₂O or less than 1 ppm of H₂O.

5. The plant according to any of claims 2 to 4,
wherein the dehydration unit comprises an inlet and an outlet, the inlet of the dehydration unit is configured to receive the gas mixture to be polished; and the outlet of the dehydration unit is fluidically connected to the inlet of the cryogenic unit so that the gas mixture to be polished that is fed to the inlet of the cryogenic unit comprises 1 ppm of H₂O or less than 1 ppm of H₂O.

6. The plant according to any of claims 1 to 5, wherein the storage unit comprises a pressure-reducing device configured to expand the liquid CH₄ being fed to the storage unit at a pressure comprised between 1 barg and 5 barg.

7. A method of obtaining liquid methane by polishing a gas mixture comprising a portion of CO₂, at least 96% mol CH₄, and 1 ppm of H₂O or less than 1 ppm of H₂O, the method comprising:
obtaining the gas mixture to be polished;
feeding the gas mixture to be polished to a cryogenic unit and cooling the gas mixture to a first predetermined temperature comprised between - 105°C and - 90°C;
feeding the cooled gas mixture to a polishing unit to cool the cooled gas mixture to a second predetermined temperature comprised between - 160°C and - 145°C;
simultaneously liquefying and polishing the gas mixture by separating at least part of the CO₂ in solid phase from the gas mixture cooled to the second predetermined temperature;
recovering a CH₄ rich stream comprising liquid CH₄, through a CH₄ exit line; and
feeding the CH₄ rich stream comprising liquid CH₄ to a storage unit through the CH₄ exit line and storing the liquid CH₄.

8. The method according to claim 7, wherein a pressure to which the gas mixture is obtained, is comprised between 30 barg and 50 barg.

9. The method according to claim 7, wherein a pressure to which the gas mixture is obtained, is comprised between 36 barg and 39 barg.

10. The method according to any of claims 7 to 9, wherein the first predetermined temperature to which the cryogenic unit is configured to cool the gas mixture may be - 100°C.

11. The method according to any of claims 7 to 10, wherein the second predetermined temperature is - 150°C.

12. The method according to any of claims 8 to 11, the method comprising:
reducing the pressure of the CH₄ rich stream comprising liquid CH₄ to a pressure comprised between 1 barg and 5 barg, and
subcooling 3°C the liquid CH₄.

13. The method according to any of claims 7 to 12, wherein the recovered CH₄ rich stream comprises a final portion of liquid CH₄, and a final portion of liquid CO₂, wherein the final portion of the liquid CO₂ is less than or equal to 50 ppm of CO₂.

14. The method according to any of claims 7 to 13, the method comprising:
heating the polishing unit and melting the CO₂ in solid phase so that the heated CO₂ is in liquid phase or gaseous phase.

15. The method according to claim 14, the method comprising:
exiting a CO₂ rich stream comprising a portion of the CO₂ in liquid phase or gaseous phase and a portion of CH₄, through a CO₂ exit line.
